# EUROPÄISCHE PATENTSCHRIFT

(11) **EP 1 519 861 B1**
(45) Veröffentlichungstag und Bekanntmachung des Hinweises auf die Patenterteilung: **16.07.2008**
(21) Anmeldenummer: 03706266.8
(22) Anmeldetag: 30.01.2003
(51) Int. Cl.: B60S 1/08

(54) **REGENSENSOR, INSBESONDERE FÜR EIN KRAFTFAHRZEUG**
RAIN SENSOR, ESPECIALLY FOR A MOTOR VEHICLE
CAPTEUR DE PLUIE, NOTAMMENT POUR AUTOMOBILE

(30) Priorität: 28.06.2002 DE 10229239
(43) Veröffentlichungstag der Anmeldung: 06.04.2005
(73) Patentinhaber: ROBERT BOSCH GMBH, 70442 Stuttgart (DE)
(72) Erfinder: SAUTTER, Helmut, 71254 Ditzingen (DE); JERGER, Armin, 77815 Buehl (DE); WOLF, Frank, 77830 Buehlertal (DE); HOCHENBLEICHER, Gerhard, 82256 Fürstenfeldbruck (DE); THOMINET, Vincent, CH-1110 Morges (CH); YANG, Zishao, 85435 Erding (DE)
(86) Internationale Anmeldenummer: PCT/DE2003/000251
(87) Internationale Veröffentlichungsnummer: WO 2004/002789

(56) Entgegenhaltungen:
- EP-A- 0 249 031
- EP-A- 0 736 426
- EP-A- 0 999 104
- DE-A- 19 943 887
- US-A1- 2002 040 964
- PATENT ABSTRACTS OF JAPAN vol. 2000, no. 12, 3. Januar 2001 (2001-01-03) & JP 2000 266665 A (CENTRAL GLASS CO LTD), 29. September 2000 (2000-09-29)

## Beschreibung

### Stand der Technik

Die Erfindung betrifft einen Regensensor nach Gattung des unabhängigen Anspruchs.

Aus der DE 199 43 887 A1 ist bereits ein Regensensor bekannt, bei dem das Licht eines Infrarotsenders von der Innenseite des Kraftfahrzeuges aus in Richtung der Außenseite durch die Verbundglasscheibe hindurch gestrahlt wird. An der Außenseite der Scheibe wird - eine saubere Scheibe vorausgesetzt - das Licht totalreflektiert und nach innen zurückgeworfen. In der Zwischenschicht der Verbundglasscheibe ist ein Retroreflektor angeordnet, der das Licht um einen kleinen Winkel versetzt zurückwirft, sodass es im Bereich des Senders ausgekoppelt werden kann.

Weiterhin ist aus der EP-A-0 999 104 ein Regensensor mit den Merkmalen des Oberbegriffs des Anspruchs 1 bekannt.

### Vorteile der Erfindung

Der erfindungsgemäße Regensensor mit den Merkmalen des Hauptanspruchs hat den Vorteil, dass der Lichtleitkörper als optisch abgeschlossenes System ausgebildet ist. Auf diese Weise kann die sensitive Fläche weit in die Scheibe hineinragen, was insbesondere bei Scheiben die durch zwei sich gegenläufig bewegende Wischer gereinigt werden, vorteilhaft ist, da bei diesen Anlagen das Wischfeld einen keilförmigen Einschnitt im Bereich des mittleren Innenspiegels, an dem üblicherweise der Regensensor angeordnet ist, aufweist. Darüber hinaus kann durch eine derartige Ausbildung eine wesentlich größere sensitive Fläche vorgesehen sein, wodurch die Empfindlichkeit des Regensensors erhöht und das Ansprechverhalten verbessert wird.

Der Lichtleitkörper weist einen lichtleitenden Kern und einen optische isolierenden Mantel auf, da auf diese Weise die Einkopplung von störendem Fremdlicht minimiert wird und darüber hinaus der Verlust von Nutzlicht reduziert wird.

Durch die in den Unteransprüchen aufgeführten Maßnahmen ergeben sich vorteilhafte Weiterbildungen und Verbesserungen der im Hauptanspruch angegebenen Merkmale.

Weiterhin ist es als vorteilhaft anzusehen, wenn der Lichtleitkörper ein Einkoppelelement zur Einkopplung von Strahlung in die Zwischenschicht der Scheibe aufweist.

Dadurch, dass der Lichtleitkörper ein Führungselement zur Führung der Strahlung in der Scheibe aufweist, kann die sensitive Fläche an beliebiger Stelle auf der Scheibe angeordnet werden.

Dadurch, dass der Lichtleitkörper ein Auskoppelelement zur Auskopplung der Strahlung aus dem Führungselement aufweist, kann dieser als integriertes Bauteil kostengünstig hergestellt werden.

Vorteilhafterweise können Sender und Empfänger des Regensensors räumlich dicht nebeneinander angeordnet werden, wenn der Lichtleitkörper einen Retroreflektor zur Reflexion der Strahlung aufweist.

Besonders vorteilhaft ist es, wenn das Einkoppelelement als Hologramm, insbesondere als geprägtes Oberflächenhologramm, ausgebildet ist.

Besonders vorteilhaft ist darüber hinaus, wenn das Führungselement und/oder das Auskoppelelement als Hologramm, insbesondere als Volumenhologramm, ausgebildet ist. Auf diese Weise ist das Führungselement und das Auskoppelungselement für den Fahrer des Kraftfahrzeugs transparent und schränkt damit das Sichtfeld des Fahrzeuglenkers nicht ein.

In einer kostensparenden Variante ist der optisch isolierende Mantel klebend ausgebildet bzw. besteht selbst aus Klebstoff.

In einer einfachen Ausgestaltung des erfindungsgemäßen Regensensors weist dieser einen weiteren Lichtleitkörper zur Einkopplung der Strahlung in die Scheibe auf.

In einer weiteren Verbesserung ist vorgesehen, dass der Lichtleitkörper aus einer Stirnseite der Scheibe herausgeführt ist, da auf diese Weise die Strahlung direkt in den Lichtleitkörper eingekoppelt werden kann.

Allgemein ist es in vorteilhafterweise möglich, den Lichtleitkörper als optische Faser auszubilden und das Licht als Strahlung durch diese vom Sender in den Empfangsbereich und wieder in den Empfänger zu leiten.

### Zeichnungen

Ein Ausführungsbeispiel der Erfindung ist in den Zeichnungen dargestellt und in der nachfolgenden Beschreibung näher erläutert. Es zeigen:
Figur 1 die Front eines Kraftfahrzeugs mit einem erfindungsgemäßen Sensor,
Figur 2 einen Schnitt durch die Frontscheibe eines Kraftfahrzeugs mit einem erfindungsgemäßen Sensor und
Figuren 3 bis 8 verschiedene Varianten des erfindungsgemäßen Regensensors aus Figur 2.

### Beschreibung der Ausführungsbeispiele

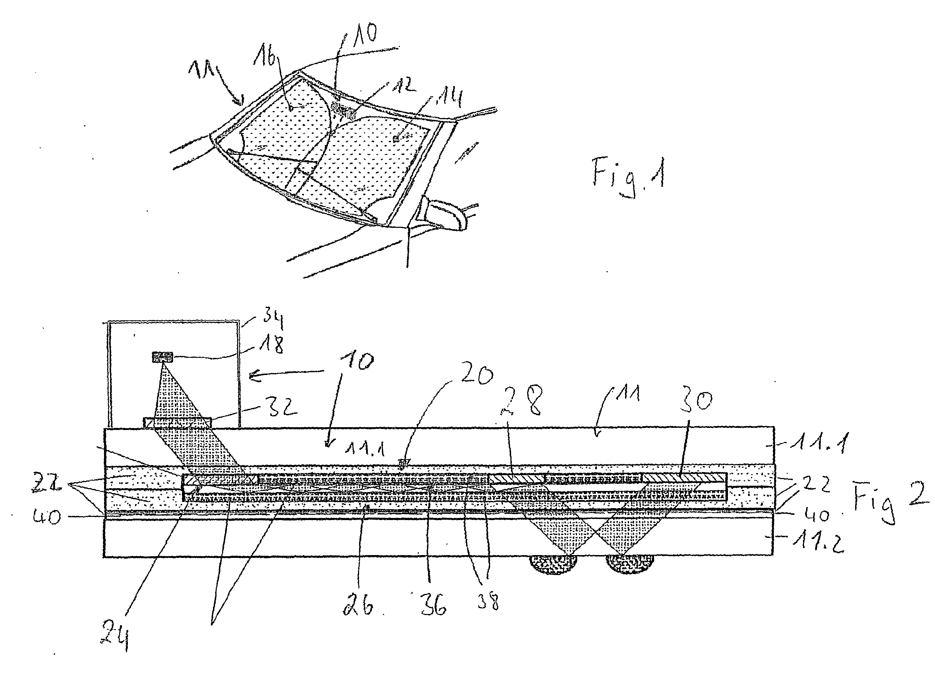

In Figur 1 ist ein Kraftfahrzeug mit einem erfindungsgemäßen Regensensor 10 dargestellt. Dieser Regensensor 10 ist auf der Frontscheibe im Bereich des Innenspiegels 12 montiert und ragt zumindest teilweise in die Wischflächen 14, 16 hinein.

In Figur 2 ist der erfindungsgemäße Regensensor 10 in einem Schnitt mit der Scheibe 11 dargestellt. Der Regensensor 10 besteht im Wesentlichen aus einem Sender 18, der Strahlung, beispielsweise infrarote Lichtstrahlung, abzugeben vermag und einem Lichtleitkörper 20, der in der Scheibe 11 angeordnet ist.

Die Scheibe 11 ist als übliche Verbundglasscheibe ausgebildet, die in ihrem Querschnitt mehrschichtig ausgebildet ist. Dabei ist eine innere Glasschicht 11.1 und eine äußere Glasschicht 11.2 vorgesehen, die durch eine klebende Zwischenschicht 22 verbunden sind. Diese Zwischenschicht 22 kann beispielsweise auch eine oder mehrere Funktionalschichten 40 beinhalten, die heizbar sind oder Infrarotlicht absorbieren.

In der Zwischenschicht 22, 40 ist der Lichtleitkörper 20 angeordnet, der in seiner lateralen Erstreckung mehrere Bereiche aufweist und auch in seinem Querschnitt mehrlagig ausgebildet ist. Der Lichtleitkörper 20 besteht hierbei aus einem lichtleitenden Kern 36, der von einem optisch isolierenden Mantel 38 umgeben ist. Zur Ein- und Auskopplung der Strahlung weist der Lichtleitkörper 20 weiterhin ein Einkoppelelement 24 sowie ein Auskoppelelement 28 auf, welche durch ein Führungselement 26 miteinander verbunden sind. Weiterhin weist der Lichtleitkörper 20 noch einen Retroreflektor 30 auf, der die Strahlung wieder im Bereich des Senders 18 zurückzustrahlen vermag. Der Mantel 38 weist im Bereich der Elemente 24, 28 und 30 entsprechende Öffnungen auf. Am einfachsten ist dies zu realisieren, wenn die Mantelschicht als durchgehende Schicht ausgebildet ist, die beispielsweise durch fotolithographische Prozesse die Eigenschaft von Hologrammen mit den verlangten Ein- bzw. Auskoppeleigenschaften erhält.

Weiterhin ist ein weiterer Lichtleitkörper 32 vorgesehen, der auf der inneren Scheibe 11.1 angeordnet ist und die Strahlung des Senders 18 in Richtung des Einkoppelelementes 24 lenkt.

Die Strahlung tritt dann vom Sender 18 durch den weiteren Lichtleitkörper 32 zum Einkoppelelement 24. Dies ist derart ausgebildet, dass die Strahlung in das Führungselement 26 eingekoppelt wird und von dort zum Auskoppelelement 28 geführt wird. Das Auskoppelelement 28 ist so ausgebildet, dass es die Strahlung aus dem Führungselement 26 in Richtung der Außenseite der Scheibe 11, in Richtung der Detektionsfläche lenkt. Bei trockener sauberer Scheibe 11 wird das Licht an der Glas-Luft-Grenzfläche in Richtung des Retroreflektors 30 totalreflektiert. Dieser wirft die Strahlung um einen geringen Winkel gekippt zurück, sodass diese nach einer Totalreflexion an der Glas-Luft-Grenzfläche im Detektionsbereich über das Auskoppelelement 28, das Führungselement 26 und das Einkoppelelement 24 in den Bereich des Senders 18 reflektiert wird, in dem sich ein Empfänger - hier nicht gezeichnet - befindet. Dieser detektiert die Strahlung, die zumindest um den Anteil reduziert ist, der an der benetzten Grenzfläche und damit an einer Glas-Wasser-Grenzfläche ausgekoppelt wurde. Da die Grenzfläche von der Strahlung zweimal tangiert wird, verdoppelt sich der Effekt im Verhältnis zu dem gängiger Regensensoren. Der Empfänger ist nahe dem Sender 18 angeordnet und beide in einem kleinen Gehäuse 34 untergebracht. So ist der größte Teil des Sensors außerhalb des Gehäuses 34, sodass dieses klein bleibt und beispielsweise hinter dem Innenspiegel 12 des Kraftfahrzeugs angeordnet werden kann. Das Gehäuse 34 beherbergt weiterhin eine Leiterplatte, auf der Sender 18 und Empfänger, vorzugsweise in SMD-Technik, direkt befestigt sind. Hier können auch weitere Bauelemente wie beispielsweise eine Heizeinrichtung, eine Kühleinrichtung sowie die Steuereinrichtung zur Steuerung der Scheibenwischvorrichtung des Kraftfahrzeugs untergebracht sein.

Prinzipiell ist es auch möglich, die Klebeschicht 22 als Mantelschicht vorzusehen. In diesem Falle muss der Brechungsindex der Klebeschicht geringer sein als der Brechungsindex des Kerns, um die optische Isolierung zu erreichen.

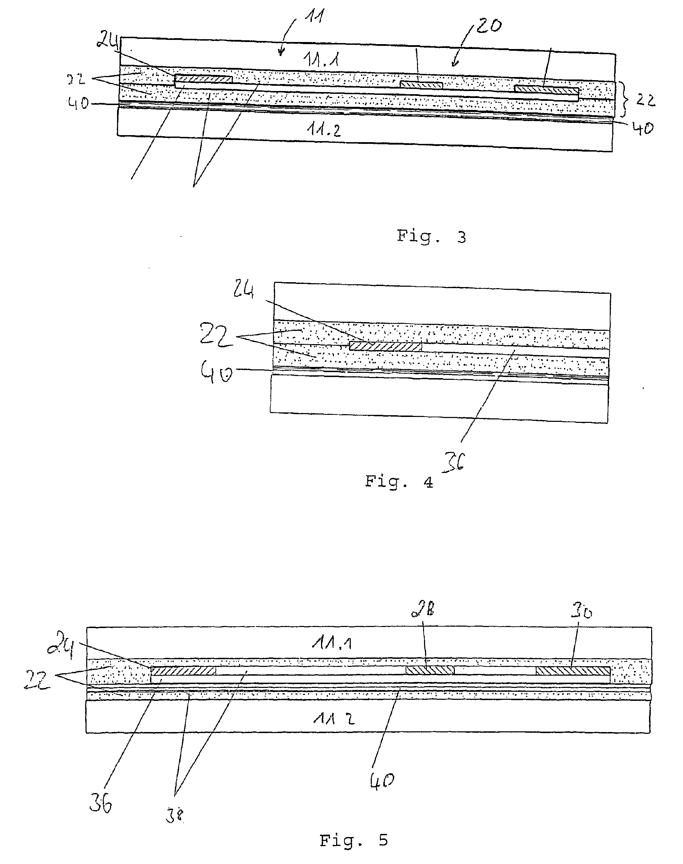

In Figur 3 ist eine Variation des erfindungsgemäßen Regensensors dargestellt. Aus Übersichtlichkeitsgründen ist hier nur der Lichtleiter 20 in der Scheibe 11 gezeigt.

In einer weiteren Variation kann das Einkoppelelement 24, wie in Figur 4 gezeigt, auch an der Stirnseite des Kerns 36 und damit in der selben Ebene wie der Kern 36 angeordnet sein. Dies gilt ebenso für das Auskopplungselement 28 sowie für den Retroreflektor 30.

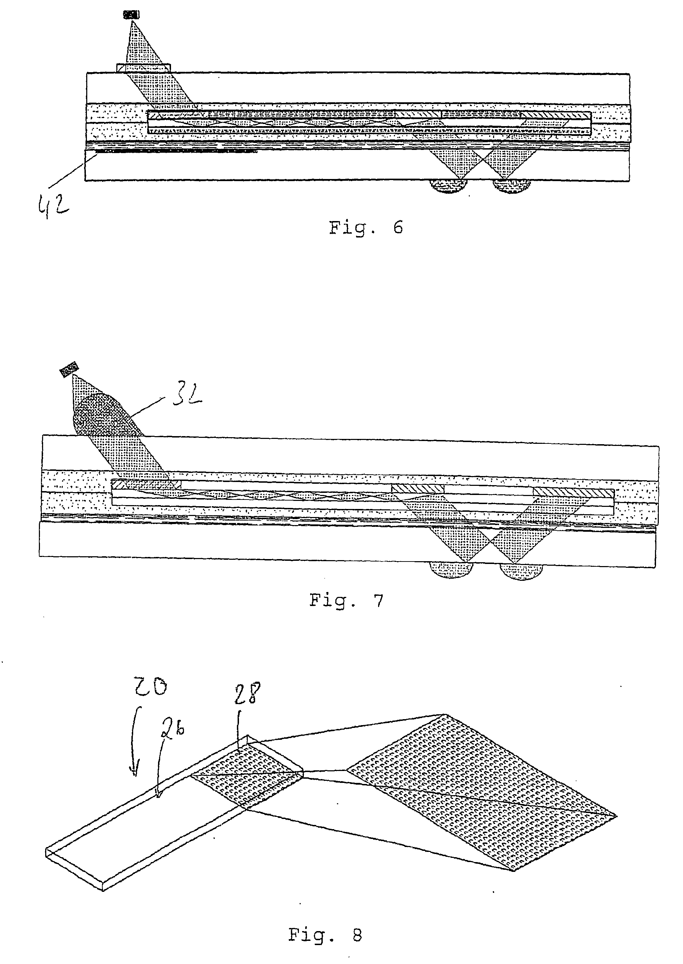

In Figur 5 ist eine weitere Variation dargestellt. Hier übernimmt die Funktionalschicht 40 zusätzlich die Funktion des Mantels 38, insbesondere auf der Seite, die dem Sender 18 abgewandt ist. Um Fremdlicht vom Empfänger fernzuhalten, ist in Figur 6 auf der dem Sender 18 gegenüberliegenden Seite der Zwischenschicht 22 ein Iso-Element zur optischen Isolation, beispielsweise eine schwarze Folie oder ein schwarzer Aufdruck, angeordnet.

In Figur 7 ist der weitere Lichtleitkörper 32 mit einer Linsenstruktur versehen und als herkömmliches optisches Element ausgebildet. Figur 8 zeigt einen Teil des Lichtleitkörpers 20 und zwar einen Abschnitt des Führungselementes 26 und das Auskoppelelement 28. Dies ist als Hologrammfolie derart ausgebildet, dass es den austretenden Stahl auffächert, sodass sich ein größerer sensitiver Bereich auf der Scheibe ergibt.

In einer weiteren Variation kann der Lichtleiter auf der Scheibeninnenseite angeordnet sein und auf das Einkoppelelement 24 verzichtet werden. Stattdessen wird das Führungselement 26 derart aufgebogen, dass seine Stirnseite direkt zum Sender 18 weist und die Strahlung auf diese Weise in das Führungselement 26 eingekoppelt wird. Hier kann der Lichtleiter 20 auch an der Stirnseite der Scheibe 11 herausgeführt und ins Wageninnere gebogen werden. Dies kann am einfachsten dadurch erreicht werden, dass eine Querschnittswandlung vorgenommen wird, in der der flache folienartige Querschnitt des Lichtleiters 20 in einen runden Querschnitt übergeführt wird, sodass eine Einkopplung der Strahlung ohne eine Anpassungsoptik ermöglicht wird. In einer weiteren Variation kann das Einkoppelelement 24 Y-förmig aufgespalten sein, sodass das zurückreflektierte Licht aus einem Arm des Y austritt, während in den anderen Arm das Licht des Senders 18 eingestrahlt wird.

## Patentansprüche

1. Regensensor (10), insbesondere für ein Kraftfahrzeug, mit einem Lichtleitkörper (20) der in einer Zwischenschicht (22) einer Scheibe (11.1, 11.2) anordenbar ist, wobei der Lichtleitkörper (20) als optisch abgeschlossenens System ausgebildet ist, **dadurch gekennzeichnet, daß** der Lichtleitkörper (20) einen lichtleitenden Kern (36) und einen optisch isolierenden Mantel (38) aufweist, so daß die Einkopplung von störendem Fremdlicht minimiert und der Verlust von Nutzlicht reduziert wird.

2. Regensensor (10) nach Anspruch 1, **dadurch gekennzeichnet, daß** der Lichtleitkörper (20) ein Einkoppelelement (24) zur Einkopplung von Strahlung in die Zwischenschicht (22) der Scheibe (11.1, 11.2) aufweist.

3. Regensensor (10) nach einem der vorhergehenden Ansprüche, **dadurch gekennzeichnet, daß** der Lichtleitkörper ein Führungselement (26) zur Führung der Strahlung in der Scheibe (11.1, 11.2) aufweist.

4. Regensensor (10) nach Anspruch 3, **dadurch gekennzeichnet, daß** der Lichtleitkörper (20) ein Auskoppelelement (28) zur Auskopplung der Strahlung aus dem Führungselement (26) aufweist.

5. Regensensor (10) nach einem der vorhergehenden Ansprüche, **dadurch gekennzeichnet, daß** der Lichtleitkörper (20) einen Retroreflektor (30) zur Reflexion der Strahlung aufweist.

6. Regensensor (10) nach einem der Ansprüche 2 bis 5, **dadurch gekennzeichnet, daß** das Einkoppelelement (24) als Hologramm, insbesondere Oberflächenhologramm ausgebildet ist.

7. Regensensor (10) nach einem der Ansprüche 4 bis 6, **dadurch gekennzeichnet, daß** das Führungselement (26) und/oder das Auskoppelelement (28) als Hologramm, insbesondere als Volumenhologramm ausgebildet sind.

8. Regensensor (10) nach einem der Ansprüche 1 bis 7, **dadurch gekennzeichnet, daß** der Mantel (38) klebend ausgebildet ist, insbesondere selbst aus einem Klebstoff besteht.

9. Regensensor (10) nach einem der vorhergehenden Ansprüche, **dadurch gekennzeichnet, daß** ein weiterer Lichtleitkörper (20) zur Einkopplung der Strahlung in die Scheibe (11.1, 11.2) vorgesehen ist.

10. Regensensor (10) nach einem der vorhergehenden Ansprüche, **dadurch gekennzeichnet, daß** der Lichtleitkörper (20) aus einer Stirnseite der Scheibe (11.1, 11.2) herausgeführt ist.

11. Regensensor (10) nach dem Oberbegriff des Anspruchs 1, **dadurch gekennzeichnet, daß** zwischen einem Sender (12) und einer Einkoppelstelle der Lichtleitkörper (20) als optische Faser ausgebildet ist.

12. Regensensor (10) nach dem Oberbegriff des Anspruchs 1, **dadurch gekennzeichnet, daß** zwischen einer Auskoppelstelle und einem Empfänger (14) der Lichtleitkörper (20) als optische Faser ausgebildet ist.

13. Regensensor (10) nach einem der Ansprüche 11 und 12, **dadurch gekennzeichnet, daß** der Lichtleiter eine optische Faser aufweist, durch die Strahlung vom Sender (12) zur Einkoppenstelle und Strahlung von der Auskoppelstelle zum Empfänger (14) führbar ist.

## Claims

1. Rain sensor (10), especially for a motor vehicle, having a light guide body (20) which can be arranged in an intermediate layer (22) of a pane (11.1, 11.2), the light guide body (20) being designed as an optically closed system, **characterized in that** the light guide body (20) has a light-guiding core (36) and an optically insulating cladding (38) such that the coupling of interfering extraneous light is minimized and the loss of useful light is reduced.

2. Rain sensor (10) according to Claim 1, **characterized in that** the light guide body (20) has a coupling element (24) for coupling radiation into the intermediate layer (22) of the pane (11.1, 11.2).

3. Rain sensor (10) according to one of the preceding claims, **characterized in that** the light guide body has a guiding element (26) for guiding the radiation in the pane (11.1, 11.2).

4. Rain sensor (10) according to Claim 3, **characterized in that** the light guide body (20) has an output element (28) for outputting the radiation from the guiding element (26).

5. Rain sensor (10) according to one of the preceding claims, **characterized in that** the light guide body (20) has a retroreflector (30) for reflecting the radiation.

6. Rain sensor (10) according to one of Claims 2 to 5, **characterized in that** the coupling element (24) is designed as a hologram, in particular a surface hologram.

7. Rain sensor (10) according to one of Claims 4 to 6, **characterized in that** the guiding element (26) and/or the output element (28) are designed as a hologram, in particular as a volume hologram.

8. Rain sensor (10) according to one of Claims 1 to 7, **characterized in that** the cladding (38) is of adhesive design, in particular itself consists of adhesive.

9. Rain sensor (10) according to one of the preceding claims, **characterized in that** a further light guide body (20) is provided for coupling the radiation into the pane (11.1, 11.2).

10. Rain sensor (10) according to one of the preceding claims, **characterized in that** the light guide body (20) is led from an end face of the pane (11.1, 11.2).

11. Rain sensor (10) according to the preamble of Claim 1, **characterized in that** the light guide body (20) is designed as an optical fibre between a transmitter (12) and a coupling point.

12. Rain sensor (10) according to the preamble of Claim 1, **characterized in that** the light guide body (20) is designed as an optical fibre between an output point and a receiver (14).

13. Rain sensor (10) according to one of Claims 11 and 12, **characterized in that** the light guide has an optical fibre by means of which radiation can be led from the transmitter (12) to the coupling point, and radiation can be led from the output point to the receiver (14).

## Revendications

1. Capteur de pluie (10) notamment pour un véhicule automobile comportant un organe guide de lumière (20) installé dans une couche intermédiaire (22) d'une vitre (11.1, 11.2), l'organe guide de lumière (20) étant un système optiquement fermé,
**caractérisé en ce que**
l'organe guide de lumière (20) comporte un noyau guide de lumière (36) et une enveloppe optiquement isolante (38) de façon à minimiser l'injection de lumière étrangère perturbatrice et réduire la perte de lumière utile.

2. Capteur de pluie (10) selon la revendication 1,
**caractérisé en ce que**
l'organe guide de lumière (20) comporte un élément de couplage (24) pour injecter le rayonnement dans la couche intermédiaire (22) de la vitre (11.1, 11.2).

3. Capteur de pluie (10) selon l'une quelconque des revendications précédentes,
**caractérisé en ce que**
l'organe guide de lumière comporte un élément de guidage (26) pour guider le rayonnement dans la vitre (11.1, 11.2).

4. Capteur de pluie (10) selon la revendication 3,
**caractérisé en ce que**
l'organe guide de lumière (20) comporte un élément de découplage (28) pour découpler le rayonnement hors de l'élément de guidage (26).

5. Capteur de pluie (10) selon l'une quelconque des revendications précédentes,
**caractérisé en ce que**
l'organe guide de lumière (20) comporte un rétroréflecteur (30) pour réfléchir le rayonnement.

6. Capteur de pluie (10) selon l'une quelconque des revendications 2 à 5,
**caractérisé en ce que**
l'élément de couplage (24) est réalisé sous la forme d'un hologramme notamment d'un hologramme de surface.

7. Capteur de pluie (10) selon l'une quelconque des revendications 4 à 6,
**caractérisé en ce que**
l'élément de guidage (26) et/ou l'élément de découplage (28) sont réalisés sous la forme d'un hologramme notamment d'un hologramme en volume.

8. Capteur de pluie (10) selon l'une quelconque des revendications 1 à 7,
**caractérisé en ce que**
l'enveloppe (38) est adhésive notamment elle est réalisée elle-même en un adhésif.

9. Capteur de pluie (10) selon l'une quelconque des revendications précédentes,
**caractérisé par**
un autre organe guide de lumière (20) pour injecter le rayonnement dans la vitre (11.1, 11.2).

10. Capteur de pluie (10) selon l'une quelconque des revendications précédentes,
**caractérisé en ce que**
l'organe guide de lumière (20) sort d'une face frontale de la vitre (11.1, 11.2).

11. Capteur de pluie (10) selon le préambule de la revendication 1,
**caractérisé en ce que**
l'organe guide de lumière (20) est réalisé sous la forme de fibres optiques entre un émetteur (12) et un point d'injection.

12. Capteur de pluie (10) selon le préambule de la revendication 1,
**caractérisé en ce que**
l'organe guide de lumière (20) est réalisé comme fibre optique entre un point de découplage et un récepteur (14).

13. Capteur de pluie (10) selon l'une quelconque des revendications 11 et 12,
**caractérisé en ce que**
le guide de lumière comporte une fibre optique pour transmettre le rayonnement de l'émetteur (12) vers le point d'injection et le rayonnement du point de découplage vers le récepteur (14).
